Europäisches Patentamt

European Patent Office

Office européen des brevets

(19)

(11) Veröffentlichungsnummer : **0 096 221**
**B1**

(12)

# EUROPÄISCHE PATENTSCHRIFT

(45) Veröffentlichungstag der Patentschrift :
22.01.86

(21) Anmeldenummer : **83104413.6**

(22) Anmeldetag : **05.05.83**

(51) Int. Cl.⁴ : **C 08 F 210/02**

(54) **Verfahren zur Herstellung von Copolymerisaten des Ethylens mit Acrylsäureestern in einem Zweizonenreaktor bei Drücken oberhalb 500 bar.**

(30) Priorität : **13.05.82 DE 3217973**

(43) Veröffentlichungstag der Anmeldung :
**21.12.83 Patentblatt 83/51**

(45) Bekanntmachung des Hinweises auf die Patenterteilung : **22.01.86 Patentblatt 86/04**

(84) Benannte Vertragsstaaten :
**AT DE FR GB**

(56) Entgegenhaltungen :
**DE-A- 1 812 094**
**GB-A- 1 090 823**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Werner, Michael, Dr.**
**Harzburger Weg 21**
**D-6800 Mannheim 33 (DE)**
Erfinder : **Brandstetter, Franz, Dr.**
**Ritterbueschel 45**
**D-6730 Neustadt (DE)**
Erfinder : **Gropper, Hans, Dr.**
**Sternstrasse 155**
**D-6700 Neustadt (DE)**
Erfinder : **Glaser, Rudolf, Dr.**
**Don-Carlos-Strasse 9**
**D-6700 Ludwigshafen (DE)**
Erfinder : **Ball, Wolfgang, Dr.**
**0 6,9**
**D-6800 Mannheim 1 (DE)**

## Beschreibung

Die Erfindung betrifft ein Verfahren zur Herstellung von Copolymerisaten des Ethylens mit Acrylsäureestern durch Copolymerisation von 100 Gewichtsteilen Ethylen mit 0,1 bis 2,0 Gewichtsteilen Acrylsäureester in einem kontinuierlich betriebenen, rohrförmigen Polymerisationssystem bei Drücken von 500 bis 5 000 bar und Temperaturen von 50 bis 450 °C in Gegenwart von radikalisch zerfallenden Polymerisationsinitiatoren, indem man dem Polymerisationssystem an dessen Einlaßstelle und gleichzeitig an einer zweiten Stelle hinter der Einlaßstelle entlang des Polymerisationssystems, wo die Reaktionstemperatur ein durch die Polymerisationswärme entstandenes Temperaturmaximum überschritten hat, ein Gemisch aus Ethylen, Initiator und Regler zuführt.

Es ist bereits bekannt, bei der Hochdruckpolymerisation von Ethylen den Ethylenstrom in mehrere Teilströme aufzuteilen und dann einen dieser Teilströme nach dem Erwärmen auf Anspringtemperatur in den Anfang eines röhrenförmigen Reaktors einzuleiten. Der andere bzw. die anderen Teilströme werden dann bei diesem bekannten Verfahren kalt an mehreren in Strömungsrichtung des polymerisierenden Ethylens hintereinander liegenden Stellen des Reaktors zugeführt. Das kalte Ethylen wird dabei an oder kurz hinter den Stellen des Reaktors eingeleitet, wo das Polymerisationsgemisch im Reaktor die maximal zulässige Polymerisationstemperatur überschritten hat. Dabei wird die Temperatur des kalt eingeleiteten Ethylens, welches ebenfalls Initiator enthält, so bemessen, daß die Temperatur nach der Zumischung im Reaktor nicht unter die Anspringtemperatur der Ethylenpolymerisation, die von dem verwendeten Katalysator abhängt, sinkt. Auf diese Weise ist es möglich, den Umsatz des Ethylens zu Polyethylen pro Durchsatz zu erhöhen. Bei diesem bekannten Verfahren werden dem Ethylen z. B. vor oder nach der Komprimierung geringe Mengen Luftsauerstoff als Polymerisationsinitiator zugegeben. Auch können statt Luftsauerstoff Peroxide oder Hydroperoxide oder Mischungen von Peroxidverbindungen zugefügt werden (vgl. US-Patentschrift 3 725 378).

Es ist auch bereits bekannt, zur Herstellung von Ethylenpolymerisaten bzw. Ethylencopolymerisaten ein Gemisch aus Ethylen, Initiator, Regler und gegebenenfalls Comonomer, das ein Acrylsäureester sein kann, einem rohrförmigen Polymerisationssystem an dessen Einlaßstelle und gleichzeitig an einer zweiten Stelle hinter der Einlaßstelle, wo die Reaktionstemperatur ein Maximum erreicht bzw. überschritten hat, zuzuführen (vgl. US-PS 4 076 919). Dabei werden, bedingt durch das unterschiedliche Polymerisationsverhalten von Ethylen und Acrylsäureestern unter den Bedingungen der Hochdruckcopolymerisation, Copolymerisate erhalten, in denen die Monomere ungleichmäßig verteilt sind.

Der vorliegenden Erfindung liegt die Aufgabe zugrunde, ein Verfahren zur Copolymerisation von Ethylen mit Acrylsäureestern in einem rohrförmigen Polymerisationssystem aufzufinden, bei dem unter Beibehaltung der guten allgemeinen Polymerisateigenschaften die optischen Eigenschaften und die Steifigkeit der aus dem Copolymerisat hergestellten Blasfolien verbessert werden.

Die Aufgabe wird erfindungsgemäß dadurch gelöst, daß die zur Copolymerisation benötigte Menge an Acrylsäureester ausschließlich an der zweiten Zuführstelle zudosiert wird.

Unter Ethylen-Acrylsäureester-Copolymerisaten werden die Copolymerisate des Ethylens verstanden, die bei den angegebenen Temperatur- und Druckverhältnissen, bevorzugt bei einem Druck von 1 500 bis 3 000 bar und bei einer Temperatur zwischen 150 und 350 °C, herstellbar sind. Der Ausdruck Ethylen-Acrylsäureester-Copolymerisate umfaßt Copolymerisate mit Gehalten an einpolymerisiertem Comonomerenanteil von 0,2 bis zu 10,0, bevorzugt 0,5 bis 5,0, Gewichtsprozent, die einen Schmelzindex von 0,1 bis 25 g/10 min, bestimmt nach ASTM-D 1238-65 T bei einer Temperatur von 190 °C und einem Auflagegewicht von 2,16 kg, und eine Dichte von 0,890 bis 0,934 g/cm$^3$, gemessen nach DIN 53 479, aufweisen.

Als Acrylsäureester kommen sämtliche mit Ethylen bei den angegebenen Temperaturen und Druckverhältnissen copolymerisierbare Acrylsäureester in Betracht. Solche Comonomere sind z. B. Ester der Acryl- und Methacrylsäure mit $C_1$- bis $C_8$-, vorzugsweise $C_1$- bis $C_6$-Alkanolen. Insbesondere bevorzugt sind Methyl- und n-Butylacrylat.

Das Ethylen wird mit den Acrylsäureestern in Gegenwart radikalischer Initiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 2 bis 100 Mol-ppm, bezogen auf das zu polymerisierende Ethylen. In Betracht kommen außerdem Peroxide und andere Radikalbildner sowie Gemische von Peroxiden, die unterschiedliche Zersetzungspunkte haben und Hydroperoxide sowie Mischungen aus Sauerstoff und Peroxiden und/oder Hydroperoxiden. Als Beispiele für Peroxide und Hydroperoxide seien genannt : tert.-Butylperoxypivalat, Di-tert.-butylperoxid, tert.-Butylhydroperoxid, tert.-Butylperbenzoat, p-Menthanhydroperoxid und Dilauroylperoxid. Unter radikalischen Polymerisationsinitiatoren sollen auch Verbindungen wie Azoisobuttersäuredinitril verstanden werden. Man kann auch Mischungen aus Sauerstoff und einem oder mehreren Peroxiden verwenden.

In einer besonderen Ausgestaltung des Verfahrens arbeitet man in Gegenwart üblicher Polymerisationsregler. Mit Hilfe der Polymerisationsregler ist es möglich, den Schmelzindex der entstehenden Ethylencopolymerisate einzustellen. Als Regler eignen sich beispielsweise Wasserstoff, Ketone, Alkohole, Ether odernormale und verzweigte Kohlenwasserstoffe. Vorzugsweise verwendet man Propan, Propylen, Methylethylketon oder Propionaldehyd. Die Polymerisationsregler werden im allgemeinen in Mengen von 0,2 bis 5 Molprozent, bezogen auf das zu polymerisierende Ethylen, eingesetzt.

Die Polymerisation wird im allgemeinen in Abwesenheit eines Lösungsmittels durchgeführt. Die geringen Mengen eines inerten Lösungsmittels, wie Benzol, Mineralöl oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Das Verfahren läßt sich unter Anwendung der üblichen kontinuierlich betriebenen röhrenförmigen Hochdruckpolymerisationssysteme (Rohrreaktoren) ausführen. Unter Rohrreaktoren versteht man rohrförmige Polymerisationsgefäße, deren Verhältnis Länge zum Durchmesser der druckfesten Rohre im Bereich 10 000 bis 60 000 zu 1 liegt. Angaben über Ethylenhochdruckpolymerisationsverfahren, bei denen Rohrreaktoren benutzt werden, finden sich beispielsweise in « Ullmanns Encyklopädie der technischen Chemie », 1980, 4. Auflage, Band 19, Seiten 167 bis 178.

Die Copolymerisation des Ethylens gemäß vorliegendem Verfahren wird bevorzugt durch Zufuhr von Luftsauerstoff initiiert. Das gasförmige Gemisch aus Ethylen, Sauerstoff und Regler wird an der Einlaßstelle und gleichzeitig an einer zweiten Stelle hinter der Einlaßstelle entlang des Rohrreaktors in Strömungsrichtung des polymerisierenden Ethylens, wo die Reaktionstemperatur ein Maximum überschritten hat, entsprechend dem Verfahren der oben zitierten US-Patentschriften 3 725 378 und 4 076 919 dem Reaktor zugeführt. Unter Einlaßstelle wird im allgemeinen der Anfang des rohrförmigen Reaktors verstanden. Der Hauptstrom wird dabei am Anfang des Reaktors zugeleitet, der Nebenstrom wird dem Reaktor in bekannter Weise in der Nähe der zweiten Stelle, an der sich ein Temperaturmaximum ausbildet, zugeführt. Durch diese Maßnahme wird die Reaktionsführung des bekannten Zweizonen-Rohrreaktors erhalten.

In dem erfindungsgemäß verbesserten Verfahren wird nun ausschließlich an der zweiten Zuführstelle entlang des Reaktors, die hinter dem Anfang des Rohrreaktors liegt und in der der Nebenstrom aus einem Gemisch von Ethylen, Initiator und gegebenenfalls Regler eingespeist wird, zusätzlich der Acrylsäureester, der in einem inerten Lösungsmittel gelöst sein kann, zugeführt.

Nach bevorzugter Verfahrensweise wird die zur Copolymerisation benötigte Menge an Acrylsäureester dem Gasstrom zudosiert, der als Nebenstrom dem Rohrreaktor an der zweiten Stelle hinter der Einlaßstelle, wo die Reaktionstemperatur ein Temperaturmaximum überschritten hat, zugeführt wird.

Die ausschließliche Dosierung von Acrylsäureester zur zweiten Reaktionszone des Zweizonen-Reaktors führt zu Ethylen-Acrylsäureester-Copolymerisaten mit verbesserten Produkteigenschaften. Durch diese Maßnahme kann eine Verbesserung der optischen Eigenschaften und der Steifigkeit der aus dem Copolymerisat hergestellten Blasfolien erreicht werden.

Das Ethylen wurde gemäß Beispiel in zwei separaten Gasströmen mit dem Mengenverhältnis 1/1 mit der angegebenen Sauerstoffmenge und der notwendigen Reglermenge versetzt und bis auf Reaktionsdruck von 2 700 bar aufkomprimiert. Von den Gassträngen wurde der eine der Einlaßstelle des Reaktors und der andere der zweiten Gaszuführstelle etwa nach 1/3 der gesamten Reaktorlänge, wo sich ein Temperaturmaximum ausgebildet hatte und die Temperatur des Gemisches schon wieder am Abklingen war, zugeführt. Durch diese Maßnahme entstanden zwei Reaktionszonen in dem rohrförmigen Reaktor.

Der Reaktor hatte in beiden Reaktionszonen ein Längen-/Durchmesserverhältnis von etwa 10 000. Zur Abführung eines Teiles der Polymerisationswärme wurden die Rohrwände von außen mit Wasser gekühlt. Bei der Ausführung des angegebenen Beispiels wurde die zur Copolymerisation benötigte Acrylsäureestermenge ausschließlich dem Gasstrom zugegeben, der zur zweiten Gaszuführstelle des Reaktors führte.

Bei der Ausführung des Vergleichsbeispiels wurde die entsprechende Acrylsäureestermenge ausschließlich dem Gasstrom zugegeben, der zur Einlaßstelle am Beginn des Reaktors führte.

Das anfallende Copolymerisat wurde in bekannter Weise in den dem Reaktor nachgeschalteten Abscheidern vom nicht umgesetzten Monomeren abgetrennt.

Beispiel

Dem oben beschriebenen Reaktor wurde aus der Eingangsseite der ersten Reaktionszone, d. h. an der Einlaßstelle des Reaktors ausschließlich Ethylen und als Polymerisationsstarter 11,6 Mol-ppm Sauerstoff, bezogen auf das Ethylen, zugegeben.

An der zweiten Gaszuführstelle wurde dem Reaktor ein Gemisch, bestehend aus 980 700 Gewichtsteilen/Stunde Ethylen und 19 300 Gewichtsteilen/Stunde n-Butylacrylat sowie als Polymerisationsstarter 6,8 Mol.-ppm Sauerstoff, bezogen auf das Ethylen, zugegeben.

Bei einem Reaktiosdruck von 2 700 bar, gemessen an der Stelle der Kaltgasnachdosierung, erreichte das Reaktionsgemisch durch die freiwerdende Reaktionswärme, die nicht über die Reaktorwand an das Kühlmedium abgegeben wurde, im ersten Teil des Reaktors eine maximale Temperatur von 300 °C und im zweiten Teil des Reaktors nach der Kaltgasdosierung eine maximale Temperatur von 270 °C.

Als Molekulargewichtsregler wurde Propionaldehyd zugesetzt. Die Reglermenge wurde so bemessen, daß sich ein Molekulargewicht entsprechend eines Schmelzindex von 0,34 g/10 min, gemessen nach DIN 53 735, einstellte.

Auf diese Weise wurden 239 000 Gewichtsteile eines Ethylen/n-Butylacrylat-Copolymerisats erhalten, dessen Acrylatgehalt 3,6 Gew.% betrug.

Der Acrylsäureestergehalt wurde aus dem Gesamtsauerstoffgehalt (Bestimmung mittels Elementaranalyse) errechnet, wobei der bestimmte Gesamtsauerstoffgehalt vor der Umrechnung um einen Anteil von 0,1 Gew.% vermindert wurde, der sich aus acrylatfreien Vergleichsversuchen als Sauerstoffanteil aus Regler- und Initiatormolekülen ergeben hatte. Das gewonnene Copolymerisat hatte eine Dichte von 0,9249 g/cm³, gemessen nach DIN 53 479. Die aus dem Copolymerisat hergestellte Blasfolie hatte einen Streuwert von 47 % (gemessen nach DIN 53 490, vgl. Kunststoffe Bd. 56 [1968], Seite 350-354) und einen Glanz von 83 Skalenteile (gemessen nach DIN 67 530). Die Steifigkeit des Copolymerisats, gemessen als G-Modul (nach DIN 53 445 bei 23 °C) betrug 165 N/mm².

Vergleichsbeispiel

Dem oben beschriebenen Reaktor wurde an der Einlaßstelle ein Gemisch bestehend aus 980 450 Gewichtsteilen/Stunde Ethylen und 19 550 Gewichtsteilen/Stunde n-Butylacrylat sowie als Polymerisationsstarter 21,2 Mol.-ppm Sauerstoff, bezogen auf das Ethylen, zugegeben.

An der zweiten Zuführstelle wurde dem Reaktor ausschließlich Ethylen und als Polymerisationsstarter 5,1 Mol-ppm Sauerstoff, bezogen auf das Ethylen, zudosiert.

Bei einem Reaktionsdruck von 2 700 bar, gemessen an der zweiten Zuführstelle, erreichte das Reaktionsgemisch durch die freiwerdende Reaktionswärme, die nicht über die Reaktorwand an das Kühlmedium abgegeben wurde, im ersten Teil des Reaktors eine maximale Temperatur von 300 °C und im zweiten Teil des Reaktors nach der Kaltgasdosierung eine maximale Temperatur von 270 °C.

Als Molekulargewichtsregler wurde Propionaldehyd verwendet. Die Reglermenge wurde so bemessen, daß sich ein Molekulargewicht entsprechend eines Schmelzindex von 0,33 g/10 min, gemessen nach DIN 53 735, einstellte. Auf diese Weise wurden 237 000 Gewichtsteile eines Ethylen/-n-Butylacrylat-Copolymerisats erhalten, dessen Acrylatgehalt 3,7 Gew.% betrug (Bestimmung wie im Beispiel 1 angegeben).

Das gewonnene Copolymerisat hatte eine Dichte von 0,9240 g/cm³, gemessen nach DIN 53 479. Die aus dem Copolymerisat hergestellte Blasfolie hatte einen Streuwert von 54 % (gemessen nach DIN 53 490) und einen Glanz von 72 Skalenteile (gemessen nach DIN 67 530). Die Steifigkeit des Copolymerisats, gemessen als G-Modul (nach DIN 53 445 bei 23 °C) betrug 145 N/mm².

**Patentanspruch**

Verfahren zur Herstellung von Copolymerisaten des Ethylens mit Acrylsäureestern durch Copolymerisation von 100 Gewichtsteilen Ethylen mit 0,1 bis 2,0 Gewichtsteilen Acrylsäureester in einem kontinuierlich betriebenen, rohrförmigen Polymerisationssystem bei Drücken von 500 bis 5 000 bar und Temperaturen von 50 bis 450 °C in Gegenwart von radikalisch zerfallenden Polymerisationsinitiatoren, indem man dem Polymerisationssystem an dessen Einlaßstelle und gleichzeitig an einer zweiten Stelle hinter der Einlaßstelle entlang des Polymerisationssystems, wo die Reaktionstemperatur ein durch die Polymerisationswärme entstandenes Temperaturmaximum überschritten hat, ein Gemisch aus Ethylen, Initiator und gegebenenfalls Regler zuführt, dadurch gekennzeichnet, daß die zur Copolymerisation benötigte Menge an Acrylsäureester ausschließlich an der zweiten Zuführstelle zudosiert wird.

**Claim**

A process for the preparation of copolymers of ethylene with acrylic acid esters by copolymerizing 100 parts by weight of ethylene with 0.1 to 2.0 parts of acrylic acid ester in a continuous-flow tubular polymerization system at pressures of from 500 to 5 000 bars and temperatures of from 50 to 450 °C in the presence of polymerization initiators which decompose into free radicals, a mixture of ethylene, initiator and optional regulator being fed into the polymerization system at its inlet and simultaneously at a second point downstream of the inlet, where the reaction temperature has exceeded a maximum brought about by the heat of polymerization, wherein the amount of acrylic acid ester required for the polymerization is metered in exclusively at the second feed point.

**Revendication**

Procédé pour la préparation de copolymères de l'éthylène avec des esters d'acide acrylique par copolymérisation de 100 parties en poids d'éthylène avec 0,1 à 2,0 parties en poids d'ester d'acide acrylique, dans un système de polymérisation tubulaire fonctionnant en continu, sous des pressions de 500 à 5 000 bars et à des températures de 50 à 450 °C, en présence d'initiateurs de polymérisation se décomposant en radicaux, en envoyant un mélange d'éthylène, d'initiateur et, le cas échéant, de régulateur dans le système de polymérisation, au point d'entrée de celui-ci et, en même temps, en un second point situé en aval du point d'entrée le long du système de polymérisation, point où la température de réaction a dépassé un maximum de température résultant de la chaleur de polymérisation, caractérisé en ce que la quantité d'ester d'acide acrylique qui est nécessaire pour la copolymérisation est ajoutée exclusivement au second point d'admission.